# EUROPÄISCHE PATENTSCHRIFT

(11) **EP 3 018 452 B1**
(45) Veröffentlichungstag und Bekanntmachung des Hinweises auf die Patenterteilung: **07.11.2018**
(21) Anmeldenummer: 15185305.8
(22) Anmeldetag: 15.09.2015
(51) Int. Cl.: G01D 5/14

(54) **MAGNET-BASIERTES MESSSYSTEM ZUR ERFASSUNG EINER BEWEGUNG UND/ODER WINKELPOSITION EINES BAUELEMENTS**
MAGNET BASED MEASURING SYSTEM FOR DETERMINING A MOVEMENT AND/OR ANGULAR POSITION OF A COMPONENT
SYSTEME DE MESURE BASE SUR UN AIMANT DESTINE A DETECTER UN MOUVEMENT ET/OU UNE POSITION ANGULAIRE D'UN COMPOSANT

(30) Priorität: 05.11.2014 DE 102014116115
(43) Veröffentlichungstag der Anmeldung: 11.05.2016
(73) Patentinhaber: Pierburg GmbH, 41460 Neuss (DE)
(72) Erfinder: BÜRGER, Frank, 52379 Langerwehe (DE); PEIFFER, Christoph, 41462 Neuss (DE)
(74) Vertreter: Patentanwälte ter Smitten Eberlein-Van Hoof Rütten Partnerschaftsgesellschaft mbB

(56) Entgegenhaltungen:
- WO-A1-2013/156916
- DE-A1-102005 007 561
- DE-A1-102007 035 498
- DE-A1-102013 000 430
- US-A- 6 124 709
- US-B1- 6 559 638

## Beschreibung

Die Erfindung betrifft ein Magnet-basiertes Messsystem zur berührungslosen Erfassung einer Bewegung und/oder Winkelposition eines Bauelements einer Maschine. Das Messsystem umfasst ein um eine Rotationsachse drehbar gelagertes und optional linear bewegbares Bauelement, eine mit dem Bauelement drehfest verbundene Erregereinheit, insbesondere ein Permanentmagnet, mittels dessen in wenigstens einem Abschnitt des Bauelements ein Magnetfeld erzeugbar ist, und eine feststehende Sensoreinheit, die zum Erfassen einer Bewegung und/oder Winkelposition des Bauelements mit der Erregereinheit funktional zusammenwirkt, In dem das von der Erregereinheit erzeugte Magnetfeld von der Sensoreinheit detektierbar ist.

Derartige Messsysteme sind hinlänglich bekannt und dienen insbesondere zur Erfassung von Drehbewegungen und/oder Winkellagen eines Bauelements, insbesondere einer Welle, und werden vielfach auch als Winkelmesseinrichtung, Drehwinkelsensor oder Drehgeber bezeichnet. Zur Winkelerfassung einer drehenden Welle ist es bekannt, die Drehbewegung eines mit der Welle verbundenen Magneten bzw. eines um die Drehachse rotierenden Magnetvektors zu erfassen. Dazu dienen berührungsfreie Sensoren, wie Hall- oder XMR-Sensoren, die dem Magneten gegenüber, zumeist an einem freien Ende der Welle stirnseitig angeordnet sind. Ferner ist bekannt, Rundmagneten sowie zweidimensionale oder dreidimensionale Hallsensoren einzusetzen, um eine indirekte Winkelerfassung über eine Arcus-Tangens-Funktion der gerichteten magnetischen Flussdichten zu erzielen. Darüber hinaus ist bekannt, dass solche Messsysteme auch der Erfassung von translatorischen bzw. linearen Bewegungen des Bauelements dienen können.

Solche Messsysteme werden insbesondere zur Steuerung und Überwachung von Maschinen und deren Bauelementen eingesetzt, beispielsweise in Fahrzeugen für Fahrzeugbremssysteme oder zur Leuchtweitenregulierung.

Aus der DE 10 2009 055 104 A1 ist eine Magnetfeldsensoranordnung zur Wegerfassung eines linear- und/oder drehbeweglichen Bauteils bekannt. Bei der beschriebenen Magnetfeldsensoranordnung ändern sich die räumlichen Komponenten eines an dem Bauteil erzeugten Magnetfeldes in ihrer Richtung über den zu erfassenden Weg des Bauteils, so dass die relative Position des Bauteils hinsichtlich eines ortsfesten und dem Magnetfeld in einem vorgegebenen Abstand gegenüberliegend angeordneten Sensors detektierbar ist.

Aus der DE 10 2008 020 153 A1 ist eine Winkelerfassungsvorrichtung bekannt, die ein Drehelement mit mehreren um eine Drehachse alternierend angeordneten magnetischen Nordpol- bzw. Südpolbereichen, einen Magnetfelderfassungsabschnitt mit einer Magnetplatte und mehreren Erfassungselementen, welche die Größen von magnetischen Komponenten in einer zur Magnetplatte senkrechten Richtung erfassen. Dazu ist die Magnetplatte senkrecht zu einer ersten Richtung (radial in Richtung der Drehachse) ausgerichtet, in welcher die magnetische Feldstärke maximal ist, wobei die Größen der magnetischen Komponenten sowohl in der ersten Richtung als auch in einer zweiten Richtung (in Umfangsrichtung des Drehelements) erfasst werden.

Aus der DE 10 2007 035 498 A1 ist eine Beleuchtungseinrichtung mit einer Winkelerfassungsvorrichtung bekannt, bei der eine Erregereinheit an einem um zwei Drehachsen begrenzt drehbar gelagerten Lichtmodul und eine feststehende Sensoranordnung radial zu beiden Drehachsen angeordnet ist. Die Bewegungsfreiheit des Lichtmoduls sowie die radiale Ausgestaltung des Lichtmoduls sind dabei durch die radial zur Drehachse angeordnete Sensoreinheit begrenzt.

Aus der WO 2013/156916 A1 ist eine Erfassungseinrichtung bekannt, bei der eine mit einer Welle verbundene Erregereinheit und eine radial zur Wellenachse angeordnete feststehende Sensoranordnung vorgesehen sind. Die Erregereinheit ist derart über einen Längsbereich der Welle angeordnet, dass die Erregereinheit und die Sensoreinheit in radialer Richtung stets überlappend angeordnet sind und eine Messung auch bei einer linearen Bewegung der Welle ermöglicht ist.

Aus der DE 10 2013 000 430 ist ein Messsystem zur Erfassung einer Winkelposition und -bewegung einer Welle bekannt, bei dem eine mit der Welle verbundene Erregereinheit und eine radial zur Wellenachse angeordnete feststehende Sensoranordnung vorgesehen sind. Die Sensoranordnung ist als eine dreidimensionale Erfassungsvorrichtung mit drei separaten Sensoren zur Erfassung jeweils einer Raumkomponente des vom Winkelgeber erzeugten Magnetfelds ausgebildet. Zur Bestimmung einer translatorischen Verschiebung der Erregereinheit bzw. der Welle relativ zu der Sensoranordnung sind mehrere am Umfang der Welle angeordnete Magnete vorgesehen.

Aus der DE 10 2005 007 561 A1 ist eine Vorrichtung Erfassung einer linearen Verschiebebewegung eines Stellventils bekannt. Als Erregereinheit dient hierbei ein Stabmagnet, der sich in Längserstreckung des Stellventils erstreckt. Eine Sensoreinrichtung ist stets raidal zu dieser Erregereinheit angeordnet.

Zusätzlich ist aus der US 6,124,709 ein magnetischer Positionssensor bekannt, bei dem auf der Drehwelle eine Scheibe angeordnet ist, auf der ein ringförmiger Magnet platziert ist. Radial beabstandet zur Welle ist gegenüberliegend zum Magneten ein Sensor angeordnet, so dass der Magnet rotatorisch entlang des Sensors bewegt wird.

Nachteilig an den bekannten Systemen ist, dass die Sensoreinheit und die Erregereinheit für eine qualitative Messung stets einander gegenüberliegend angeordnet sein müssen und dadurch der räumliche Erfassungsbereich relativ klein ist. Folglich kann ein drehendes Bauelement nur in geringem Maße linear an der Sensoreinheit vorbeibewegbar werden, ohne dass die Erregereinheit aus dem Erfassungsbereich der Sensoreinheit gelangt. Alternativ ist ein nachgeführtes Erfassungssystem erforderlich, was jedoch relativ platzintensiv sowie aufgrund des erhöhten Herstellungs- und Montageaufwandes relativ kostenintensiv ist.

Der Erfindung liegt daher die Aufgabe zugrunde, ein Magnet-basiertes Messsystem bereitzustellen, das einen relativ großen Erfassungsbereich aufweist, platzsparend aufgebaut und kostengünstig in der Herstellung und Montage ist.

Die Lösung der Aufgabe erfolgt erfindungsgemäß durch ein Messsystem mit den Merkmalen des Anspruchs 1.

Erfindungsgemäß ist die Sensoreinheit zur räumlichen Erfassung des Magnetfelds als ein dreidimensionaler Hall-Sensor (3D-Hall-Sensor) ausgebildet ist, der radial zu der Rotationsachse versetzt angeordnet ist , wobei die Sensoreinheit und die Erregereinheit entlang der Rotationsachse versetzt zueinander angeordnet sind, so dass die Sensoreinheit in einem definierten radialen Abstand zu der Erregereinheit angeordnet ist. Somit ist die Sensoreinheit insbesondere seitlich versetzt bzw. benachbart zu einer Längserstreckung des Bauelements angeordnet. Dadurch ist das Bauelement in Bezug auf die Sensoreinheit kollisionsfrei über einen relativ großen Bereich linear bzw. translatorisch bewegbar, ohne dass die Sensoreinheit die Bewegungsfreiheit des Bauelements einschränkt. Die Sensoreinheit kann das mittels der Erregereinheit erzeugte Magnetfeld von radial außen entlang des Bauelementes erfassen. Die als ein 3D-Hall-Sensor ausgebildete Sensoreinheit kann zur räumlichen Erfassung des Magnetfeldes insbesondere ein einziges 3D-Hall-Sensorelement aufweisen. Dadurch ist die Sensoreinheit relativ platzsparend aufgebaut. Durch die dreidimensionale Erfassung des Magnetfelds kann eine Verschiebung, Rotation und/oder Winkellage des Bauelements in relativ einfacher Weise detektiert werden. Die Erfassung der rotatorischen und/oder translatorischen Bewegung des Bauelements erfolgt insbesondere durch das Erfassen der sich ändernden Ausrichtung bzw. Orientierung der Magnetfeldvektoren bezogen auf einen fixen Punkt, insbesondere auf den Ort des 3D-Hall-Sensors. Die Anordnung der Erregereinheit entlang der Rotationsachse kann unabhängig von der Anordnung der Sensoreinheit bzw. eines Erfassungsabschnitts erfolgen. Somit kann die Positionierung der Erregereinheit an einer beispielweise hinsichtlich der Geometrie des Bauelements geeigneten Stelle erfolgen, beispielsweise an einem Absatz oder einer Bohrung einer Welle. Eine Positionierung und Ausrichtung der Erregereinheit in Abhängigkeit der Sensoreinheit ist nicht erforderlich. Dadurch ist ein Messsystem geschaffen, das einen relativ großen Erfassungsbereich aufweist, platzsparend aufgebaut und kostengünstig in der Herstellung und Montage ist. Die Sensoreinheit und die Erregereinheit sind entlang der Rotationsachse versetzt zueinander angeordnet. Insbesondere kann die Sensoreinheit entlang der Rotationsachse in einem definierten axialen Abstand zu dem Bauelement und/oder zu der Erregereinheit angeordnet sein. Dadurch kann das von der Erregereinheit erzeugte Magnetfeld räumlich besonders gut erfasst werden, so dass eine besonders genaue Messung der Bewegung und Winkelposition ermöglicht ist. Ferner ist es ermöglicht, dass die Sensoreinheit derart weit von der Erregereinheit entfernt angeordnet sein, dass das maximale Magnetfeld außerhalb zumindest einer der Erfassungsrichtungen des 3D-Hall-Sensors liegt. Dadurch können die Anordnung der Sensoreinheit und die der Erregereinheit relativ unabhängig voneinander erfolgen.

Vorzugsweise weist die als 3D-Hall-Sensor ausgebildete Sensoreinheit zur räumlichen Erfassung des Magnetfeldes zumindest drei einzelne Hall-Sensorelemente auf, wobei ein erstes Hall-Sensorelement in eine erste Richtung, die sich radial in Richtung der Rotationsachse erstreckt, ein zweites Hall-Sensorelement in eine zweite Richtung, die sich in eine Umfangsrichtung erstreckt, und ein drittes Hall-Sensorelement in eine dritte Richtung, die sich parallel zu der Rotationsachse erstreckt, ausgerichtet sind. Dadurch kann das Magnetfeld in jeder Richtung über zumindest ein separat ausgebildetes Hall-Sensorelement erfasst werden. Alternativ kann die zweite Richtung senkrecht zu der ersten Richtung und in einem 45°-Winkel zu der dritten Richtung angeordnet sein. Dadurch kann mittels des zweiten Hall-Sensorelements ein entlang der Rotationsachse insbesondere axial von der Sensoreinheit beabstandeter Bereich hinsichtlich des erzeugten Magnetfelds erfasst werden. Besonders bevorzugt sind pro Richtung jeweils zwei Hall-Sensorelemente angeordnet, so dass jeweils eine redundante Messung ermöglicht ist und das System dadurch relativ sicher ist. Die erfassten Signale der einzelnen Hall-Sensorelemente werden bevorzugt zu einem Gesamt-Signal ausgewertet, das das Magnetfeld dreidimensional wiedergeben und somit eine Winkelposition bzw. Bewegung des Bauelementes detektieren kann,

In einer Ausgestaltung der Erfindung ist die Sensoreinheit in einem definierten radialen Abstand zu der Rotationsachse und/oder zu dem Bauelement angeordnet Dadurch kann das von der Erregereinheit erzeugte Magnetfeld räumlich besonders gut erfasst werden, so dass eine besonders genaue Messung der Bewegung und Winkelposition ermöglicht ist. Es ist möglich, dass die Sensoreinheit derart weit von der Erregereinheit entfernt angeordnet sein, dass das maximale Magnetfeld außerhalb zumindest einer der Erfassungsrichtungen des 3D-Hall-Sensors liegt. Dadurch können die Anordnung der Sensoreinheit und die der Erregereinheit relativ unabhängig voneinander erfolgen.

Vorzugsweise ist die Sensoreinheit als eine kontinuierlich erfassende Messeinrichtung ausgebildet ist, so dass ein kontinuierliches Ausgangssignal von der Sensoreinheit ausgebbar ist. Dadurch kann ein über die Zeit besonders exakter Bewegungs- und Lageverlauf des Bauelements erfasst werden. Alternativ gibt die Sensoreinheit punktuelle Messwerte aus, so dass die Bewegung und Winkelposition punktuell zu vorgegebenen Zeiten oder an vorgegebenen Orten detektierbar ist.

Besonders bevorzugt umfasst die Sensoreinheit eine Auswerteinrichtung zur Auswertung der erfassten Signale, so dass die von der Sensoreinheit detektierten Signale zu einem Gesamtsignal zusammengefasst werden können, wobei das Gesamtsignal eine Winkelposition bzw. Bewegung des Bauelementes wiedergibt. Insbesondere kann mittels der Auswerteeinrichtung eine erfasste Orientierungsänderung der Magnetfeldvektoren ausgewertet werden. Dies erfolgt bei der als 3D-Hall-Sensor ausgebildeten Sensoreinheit zumeist über eine Arcus-Tangens-Bildung der magnetischen Flussdichte bzw. eine indirekte Winkelerfassung über inplanare Magnetfeldkomponenten. Ein solcher Hallsensor kann die Winkelposition beispielsweise eines Rundmagneten über einen Winkel von 360° eindeutig detektieren.

Vorzugsweise ist die Erregereinheit als ein magnetischer Dipol mit einem magnetischen Nordpolbereich und einem magnetischen Südpolbereich ausgebildet. Dadurch ist das Messsystem relativ einfach aufgebaut und dadurch in der Herstellung und Montage kostengünstig. Der als Dipol ausgebildete Magnet kann von der als 3D-Hall-Sensor ausgebildeten Sensoreinheit exakt erfasst werden und ermöglicht dadurch ein relativ genaues Ausgangssignal zur Wiedergabe der Bewegung und/oder Winkelposition des Bauelements.

Grundsätzlich kann die Erregereinheit stirnseitig, mittig oder als Ringmagnet umfänglich an dem Bauelement angeordnet sein. Besonders bevorzugt ist die Erregereinheit als ein Stift ausgebildet, der in eine in Bezug auf die Rotationsachse radiale Bohrung in dem Bauelement eingesetzt ist. Bei der Ausgestaltung des Bauelements als eine Welle kann die als Stift ausgebildete Erregereinheit insbesondere diametral in die Bohrung eingesetzt sein. Alternativ kann auch das Bauelement selbst einen magnetischen Bereich aufweisen, der als Erregereinheit des Messsystems fungiert. Dadurch können die Erregereinheit und das Bauelements ein Teil sein, so dass eine separate Erregereinheit nicht erforderlich ist. Dadurch kann das Messsystem besonders kostengünstig sein.

In einer weiteren Ausgestaltung der Erfindung ist die Erregereinheit als ein Magnetkörper an einer Seitenwand des Bauelements angeordnet. Insbesondere kann die Erregereinheit als ein magnetischer Block ausgebildet sein, der von radial außen an das Bauelement, beispielsweise an einem Absatz einer Welle, angesetzt und befestigt werden kann.

Das Bauelement kann abtriebsseitig angeordnet sein, insbesondere kann das Bauelement eine Abtriebswelle eines Antriebsmotors und/oder einer Kupplung sein. Dies ermöglicht eine relativ einfache und genaue Erfassung der Bewegung und Winkelposition der Abtriebswelle.

Nachfolgend wird die Erfindung anhand einer bevorzugten Ausführungsformen unter Bezugnahme auf die anliegende Zeichnung näher erläutert.

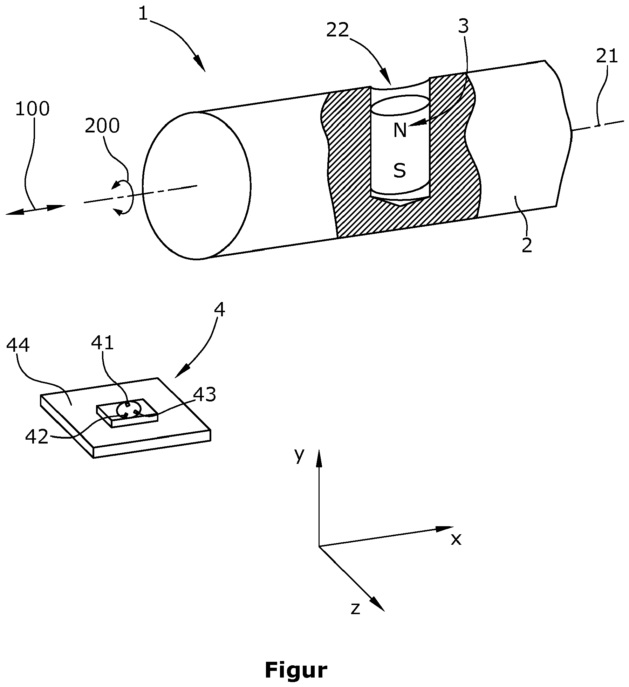

Die einzige Figur zeigt schematisch eine perspektivische Ansicht des erfindungsgemäßen Messsystems.

In der Figur ist ein Magnet-basiertes Messsystem 1 zur berührungslosen Erfassung einer Bewegung 100, 200 und/oder einer Winkelposition eines Bauelements 2 einer nicht dargestellten Maschine gezeigt. Die nicht dargestellte Maschine kann beispielsweise ein Fahrzeug, insbesondere eine Fahrzeugbremse oder ein Leuchtweiten-Regulierungssystem sein. Das Bauelement 2 ist vorliegend eine Welle mit einer Dreh- oder Rotationsachse 21. Das Bauelement 2 ist bezüglich der Rotationsachse drehbar 200 und linear verschiebbar 100 bewegbar.

Zur Erfassung der Bewegung 100, 200 und/oder Winkelposition des Bauelements 2 sind eine Erregereinheit 3 und eine Sensoreinheit 4 vorgesehen. Die Erregereinheit 3 ist als ein magnetischer Stift ausgebildet, der in eine radiale Bohrung 22 in das Bauelement 2 eingesetzt ist. Der als Erregereinheit 3 ausgebildete Stift ist als ein Permanentmagnet ausgebildet und weist einen magnetischen Dipol auf, insbesondere ist eine erste Hälfte des Stifts bis zu einem ersten freien Ende als ein magnetsicher Nordpolbereich und eine diesem gegenüberliegende zweite Hälfte des Stifts bis zu dem anderen freien Ende des Stifts als ein magnetsicher Südpolbereich ausgebildet. Dadurch erzeugt die Erregereinheit ein magnetisches Dipolfeld um das Bauelement, welches von der Sensoreinheit 4 detektiert werden kann.

Die Sensoreinheit 4 ist zur räumlichen Erfassung des erzeugten Dipol- bzw. Magnetfelds als ein dreidimensionaler Hall-Sensor ausgebildet und radial zu der Rotationsachse 21 versetzt angeordnet. Durch die Anordnung der Sensoreinheit 4 benachbart zu dem Bauelement 2 ist insbesondere eine kollisionsfreie, insbesondere translatorische Bewegung 100 des Bauelements 2 gegenüber der Sensoreinheit 4 ermöglicht. Ferner kann die Sensoreinheit 4 das erzeugte Magnetfeld von radial außen des Bauelements 2 über einen relativ großen Bereich entlang und um das Bauelement 2 herum erfassen. Dadurch ist eine besonders exakte Aussage über die Bewegung und/oder Winkelposition des Bauelements 2 ermöglicht. Die unabhängige Anordnung der Sensoreinheit 4 von der Erregereinheit 3 entlang der Rotationsachse 21 ermöglicht, dass die Erregereinheit 21 - wie vorliegend - an der zur Sensoreinheit 4 axial versetzt angeordneten Bohrung 22 der Welle 2 positioniert sein kann. Es sollte deutlich sein, dass die Sensoreinheit 4 und die Erregereinheit 3 zueinander relativbeweglich angeordnet sind. Eine Positionierung und Ausrichtung der Erregereinheit 3 in Abhängigkeit der Sensoreinheit 4 ist nicht erforderlich, so dass die Positionierung der Sensoreinheit 4 und Erregereinheit 3 in gewissem Grenzen relativ frei gestaltet werden kann und dadurch die Herstellung und Montage des Messsystems 1 in relativ einfacher Weise an unterschiedliche bzw. individuelle Einbauorte angepasst werden kann.

Die als ein 3D-Hall-Sensor ausgebildete Sensoreinheit 4 umfasst vorliegend drei einzelne Hall-Sensorelemente 41, 42, 43, die jeweils bezüglich einer Raumkoordinate x, y, z ausgerichtet sind. Dabei sind zur Messung ein erstes Hall-Sensorelement 41 in eine erste Richtung y, die sich radial in Richtung der Rotationsachse 21 erstreckt, ein zweites Hall-Sensorelement 42 in eine zweite Richtung z, die sich in eine Umfangsrichtung erstreckt, und ein drittes Hall-Sensorelement 43 in eine dritte Richtung x, die sich parallel zu der Rotationsachse 21 erstreckt, ausgerichtet. Dadurch kann das Magnetfeld in jeder Richtung x, y, z über zumindest ein separat ausgebildetes Hall-Sensorelement 41, 42, 43 erfasst werden. Die Richtungsgeraden x, y, z sind vorliegend orthogonal zueinander ausgerichtet und entsprechen somit bekannten Raumkoordinaten. Durch die dreidimensionale Erfassung des Magnetfelds kann insbesondere eine Verschiebung 100, Rotation 200 und/oder Winkelposition des Bauelements 2 in relativ einfacher Weise detektiert werden. Die Erfassung der Bewegung 100, 200 des Bauelements 2 erfolgt dabei insbesondere durch das Erfassen der sich ändernden Orientierung der Magnetfeldvektoren bezogen auf einen fixen Punkt, beispielsweise auf den Ort des 3D-Hall-Sensors.

Die Sensoreinheit 4 umfasst eine Auswerteinrichtung 44, in der die mittels der Hall-Sensorelemente 41, 42, 43 kontinuierlich erfassten Einzel-Signale zusammengetragen und zu einem Gesamt-Signal ausgewertet werden. Die Einzelsignale der der Hall-Sensorelemente 41, 42, 43 geben insbesondere eine Orientierungsänderung der Magnetfeldvektoren wieder. Die Auswertung erfolgt hierbei zumeist über eine Arcus-Tangens-Bildung der magnetischen Flussdichte bzw. eine indirekte Winkelerfassung über inplanare Magnetfeldkomponenten. Das in der Auswerteinrichtung 44 generierte Ausgangs- bzw. Gesamtsignal beinhaltet die Informationen über das detektierte dreidimensionale Magnetfeld bzw. über die Bewegung 100, 200 und/oder Winkelposition des Baudelements 2. Das Gesamtsignal ist vorliegend als ein kontinuierliches Analogsignal ausgebildet.

Somit ist ein Messsystem 1 geschaffen, das einen relativ großen Erfassungsbereich aufweist, platzsparend aufgebaut und kostengünstig in der Herstellung und Montage ist. Es sollte deutlich sein, dass der Hauptanspruch nicht auf das beschriebene Ausführungsbeispiel begrenzt ist. Wie bereits erwähnt ist insbesondere eine Anpassung der Anordnung der als 3D-Sensor ausgebildeten Sensoreinheit an die Lage und Ausführung des Bauelements und/oder der Erregereinheit variabel.

### Bezugszeichenliste

- 1: Messsystem
- 2: Bauelement
- 21: Rotationsachse
- 22: Bohrung
- 3: Erregereinheit
- 4: Sensoreinheit
- 41: erstes Hall-Sensorelement
- 42: zweites Hall-Sensorelement
- 43: drittes Hall-Sensorelement
- 44: Auswerteinrichtung
- 100: lineare Bewegung
- 200: Drehbewegung

## Patentansprüche

1. Magnet-basiertes Messsystem (1) zur Erfassung einer Bewegung (100, 200) und/oder Winkelposition eines Bauelements (2) einer Maschine mit
- einem um eine Rotationsachse (21) drehbar gelagerten Bauelement (2),
- einer mit dem Bauelement (2) drehfest verbundenen Erregereinheit (3), mittels derer ein Magnetfeld erzeugbar ist, und
- einer feststehenden Sensoreinheit (4), die zum Erfassen einer Bewegung (100, 200) und/oder Winkelposition des Bauelements (2) mit der Erregereinheit (3) funktional zusammenwirkt und zur räumlichen Erfassung des Magnetfelds als ein 3D-Hall-Sensor ausgebildet ist, der radial zu der Rotationsachse (21) versetzt angeordnet ist,
**dadurch gekennzeichnet, dass**
die Sensoreinheit (4) und die Erregereinheit (3) entlang der Rotationsachse (21) versetzt zueinander angeordnet sind, und die Sensoreinheit (4) in einem definierten radialen Abstand zu der Erregereinheit (3) angeordnet ist.

2. Magnet-basiertes Messsystem (1) nach Anspruch 1, **dadurch gekennzeichnet, dass**
die Sensoreinheit (4) zumindest drei Hall-Sensorelemente (41, 42, 43) aufweist, wobei ein erstes Hall-Sensorelement (41) in eine erste Richtung (y), die sich radial in Richtung der Rotationsachse (21) erstreckt, ein zweites Hall-Sensorelement (42) in eine zweite Richtung (z), die sich in eine Umfangsrichtung erstreckt, und ein drittes Hall-Sensorelement (43) in eine dritte Richtung (x), die sich parallel zu der Rotationsachse (21) erstreckt, ausgerichtet sind.

3. Magnet-basiertes Messsystem (1) nach einem der Ansprüche 1 oder 2, **dadurch gekennzeichnet, dass**
die Sensoreinheit (4) in einem definierten radialen Abstand zu der Rotationsachse (21) und/oder zu dem Bauelement (2) angeordnet ist.

4. Magnet-basiertes Messsystem (1) nach einem der voranstehenden Ansprüche, **dadurch gekennzeichnet, dass**
die Sensoreinheit (4) als eine kontinuierlich erfassende Messeinrichtung ausgebildet ist.

5. Magnet-basiertes Messsystem (1) nach einem der voranstehenden Ansprüche, **dadurch gekennzeichnet, dass**
die Sensoreinheit (4) eine Auswerteinrichtung (44) zur Auswertung der erfassten Signale aufweist.

6. Magnet-basiertes Messsystem (1) nach einem der voranstehenden Ansprüche, **dadurch gekennzeichnet, dass**
die Erregereinheit (3) als ein magnetischer Dipol ausgebildet ist.

7. Magnet-basiertes Messsystem (1) nach einem der voranstehenden Ansprüche, **dadurch gekennzeichnet, dass**
die Erregereinheit (3) als ein Stift ausgebildet ist, der in eine Bohrung (22) des Bauelements (2) eingesetzt Ist.

8. Magnet-basiertes Messsystem (1) nach einem der voranstehenden Ansprüche, **dadurch gekennzeichnet, dass**
die Erregereinheit (3) als ein Magnetkörper an einer Seitenwand des Bauelements angeordnet ist.

9. Magnet-basiertes Messsystem (1) nach einem der voranstehenden Ansprüche, **dadurch gekennzeichnet, dass**
das Bauelement (2) eine Abtriebswelle eines Antriebsmotors und/oder einer Kupplung ist.

## Claims

1. Magnet-based measuring system (1) for determining a movement (100, 200) and/or an angular position of a component (2) of a machine, comprising
- a component (2) supported for rotation about a rotary axis (21),
- an exciter unit (3) fixed for rotation with the component (2), by which unit a magnetic field can be generated, and
- a stationary sensor unit (4) which functionally cooperates with the exciter unit (3) for determining a movement (100, 200) and/or an angular position of the component (2) and which is designed as a 3D Hall sensor for the spatial determination of the magnetic field, said sensor being arranged radially offset with respect to the rotary axis (21),
**characterized in that**
the sensor unit (4) and the exciter unit (3) are arranged offset with respect to each other along the rotary axis (21), and the sensor unit (4) is arranged at a defined radial distance from the exciter unit (3).

2. Magnet-based measuring system (1) of claim 1, **characterized in that** the sensor unit (4) comprises at least three Hall sensor elements (41, 42, 43), a first Hall sensor element (41) being oriented in a first direction (y) extending radially in the direction of the rotary axis (21), a second Hall sensor element (42) being oriented in a second direction (z) extending in a circumferential direction, and a third Hall sensor element (43) being oriented in a third direction (x) extending in parallel with the rotary axis (21).

3. Magnet-based measuring system (1) of one of claim 1 or 2, **characterized in that** the sensor unit (4) is arranged at a defined radial distance to the rotary axis (21) and/or the component (2).

4. Magnet-based measuring system (1) of one of the preceding claims, **characterized in that** the sensor unit (4) is configured as a continuously detecting measuring means.

5. Magnet-based measuring system (1) of one of the preceding claims, **characterized in that** the sensor unit (4) comprises an evaluation unit (44) for evaluating the detected signals.

6. Magnet-based measuring system (1) of one of the preceding claims, **characterized in that** the exciter unit (3) is designed as a magnetic dipole.

7. Magnet-based measuring system (1) of one of the preceding claims, **characterized in that** the exciter unit (3) is designed as a pin which is inserted into a bore (22) of the component (2).

8. Magnet-based measuring system (1) of one of the preceding claims, **characterized in that** the exciter unit (3) is arranged as a magnet body on a side wall of the component.

9. Magnet-based measuring system (1) of one of the preceding claims, **characterized in that** the component (2) is an output shaft of a drive motor and/or of a clutch.

## Revendications

1. Système de mesure (1) basé sur un aimant destiné à détecter un mouvement (100, 200) et/ou une position angulaire d'un composant (2) d'une machine, comprenant
- un composant (2) supporté de manière à être rotatif autour d'un axe de rotation (21),
- une unité d'excitation (3) reliée au composant (2) pour tourner avec celui-ci, l'unité pouvant générer un champ magnétique, et
- une unité capteur (4) stationnaire en coopération fonctionnelle avec l'unité d'excitation (3) pour la détection d'un mouvement (100, 200) et/ou une position angulaire du composant (2) et réalisée sous forme d'un capteur Hall 3D pour la détection spatiale du champ magnétique, le capteur étant disposé radialement décalé par rapport à l'axe de rotation (21),
**caractérisé en ce que**
l'unité capteur (4) et l'unité d'excitation (3) sont décalées l'une par rapport à l'autre le long de l'axe de rotation (21) et l'unité capteur (4) est disposée à une distance radiale définie de l'unité d'excitation (3).

2. Système de mesure (1) basé sur un aimant selon la revendication 1, **caractérisé en ce que** l'unité capteur (4) comprend au moins trois éléments capteur Hall (41, 42, 43), un premier élément capteur Hall (41) étant orienté dans une première direction (y) qui s'étend radialement vers l'axe de rotation (21), un deuxième élément capteur Hall (42) étant orienté dans une deuxième direction (z) qui s'étend dans une direction circonférentielle, et un troisième élément capteur Hall (43) étant orienté dans une troisième direction (x) qui s'étend en parallèle à l'axe de rotation (21).

3. Système de mesure (1) basé sur un aimant selon l'une des revendications 1 ou 2, **caractérisé en ce que** l'unité capteur (4) est disposée à une distance radiale définie de l'axe de rotation (21) et/ou du composant (2).

4. Système de mesure (1) basé sur un aimant selon l'une quelconque des revendications précédentes, **caractérisé en ce que** l'unité capteur (4) est réalisée sous forme d'un moyen de mesurage à détection continue.

5. Système de mesure (1) basé sur un aimant selon l'une quelconque des revendications précédentes, **caractérisé en ce que** l'unité capteur (4) comprend un moyen d'évaluation (44) pour l'évaluation des signaux détectés.

6. Système de mesure (1) basé sur un aimant selon l'une quelconque des revendications précédentes, **caractérisé en ce que** l'unité d'excitation (3) est réalisée sous forme d'un dipôle magnétique.

7. Système de mesure (1) basé sur un aimant selon l'une quelconque des revendications précédentes, **caractérisé en ce que** l'unité d'excitation (3) est réalisée sous forme d'une broche insérée dans un alésage (22) du composant (2).

8. Système de mesure (1) basé sur un aimant selon l'une quelconque des revendications précédentes, **caractérisé en ce que** l'unité d'excitation (3) est disposée sur une paroi latérale du composant sous forme d'un corps magnétique.

9. Système de mesure (1) basé sur un aimant selon l'une quelconque des revendications précédentes, **caractérisé en ce que** le composant (2) est un arbre de sortie d'un moteur d'entrainement et/ou d'une embrayage.
